# FASCICULE DE BREVET EUROPEEN

(11) **EP 2 487 020 B1**
(45) Date de publication et mention de la délivrance du brevet: **02.09.2020**
(21) Numéro de dépôt: 12154676.6
(22) Date de dépôt: 09.02.2012
(51) Int. Cl.: B29C 45/14, B29C 45/03, B29C 65/54, B29C 65/70, F16J 15/14

(54) **Procédé de raccordement de joints d'étanchéité**
Verfahren zum Verbinden von Dichtungsfugen
Method for coupling seals

(30) Priorité: 09.02.2011 FR 1151051
(43) Date de publication de la demande: 15.08.2012
(73) Titulaire: Repack-S, 71290 Cuisery (FR)
(72) Inventeur: Legros, Lucien, 01480 SAVIGNEUX (FR)
(74) Mandataire: Delorme, Nicolas

(56) Documents cités:
- FR-A1- 2 741 684
- GB-A- 861 608
- JP-A- 2000 141 403

## Description

La présente invention se rapporte au domaine technique de la fabrication de joints d'étanchéité, et plus particulièrement à un procédé de raccordement sur site des extrémités de deux portions de joint d'étanchéité appartenant à deux joints d'étanchéité distincts ou à un unique joint d'étanchéité ouvert.

Il est connu du document de brevet GB 861 608 A un dispositif de moulage par injection de matière thermoplastique.

Il est connu du document de brevet FR 2 741 684 A1 un procédé et un dispositif de jonction d'une courroie armée en matériau thermoplastique.

Toutefois, ces documents enseignent seulement l'enrobage avec un matériau thermoplastique de câbles ou brins préalablement raccordés, l'enrobage n'étant pas destiné à la transmission intégrale des efforts extérieurs appliqués au produit.

Il est connu de fabriquer des joints d'étanchéité en matériau élastomère. Les joints sont classiquement extrudés. Les joints sont généralement utilisés dans toutes applications mécanique ou hydraulique, par exemple pour assurer l'étanchéité statique et dynamique de vérins hydrauliques, de vérins de presse à filer ou encore l'étanchéité de pales hydrauliques, hydroliennes ou éoliennes.

Cependant, les procédés connus de fabrication de ces joints d'étanchéité présentent des limites pour certaines applications, en particulier dans le cas d'équipements présentant des dimensions importantes, demandant en outre une grande précision dimensionnelle. Il devient nécessaire de fabriquer des joints dont les dimensions correspondent aux dimensions des éléments de ces installations. Il est connu de raccorder les extrémités de portions de joints ou d'un unique joint ouvert en collant ou en chauffant les extrémités à raccorder. Toutefois, la qualité dimensionnelle de la jonction en résultant est parfois insuffisante pour les applications auxquelles le joint d'étanchéité ainsi obtenu est destiné.

Aussi la présente invention a pour but de remédier à tout ou partie des inconvénients mentionnés ci-dessus en proposant un procédé de fabrication de joints d'étanchéité par raccordement de plusieurs portions de joint d'étanchéité et un dispositif pour mettre en œuvre ce procédé.

A cet effet, la présente invention a pour objet un procédé de raccordement sur site d'une première extrémité et d'une deuxième extrémité de formes similaires et en matériau thermoplastique, notamment du polyuréthane thermoplastique, d'un joint d'étanchéité ouvert ou respectivement d'un premier joint d'étanchéité et d'un deuxième joint d'étanchéité sur une surface à étanchéifier, tel qu'il comprend les étapes consistant à :
- amener et monter sur site un dispositif de raccordement et le positionner sur la surface à étanchéifier, en aplomb de la première extrémité et de la deuxième extrémité à raccorder,
- injecter à chaud entre la première extrémité et la deuxième extrémité un matériau thermoplastique identique à celui de la première extrémité et de la deuxième extrémité, au moyen du dispositif de raccordement préalablement monté,
- refroidir ou laisser refroidir le matériau thermoplastique injecté entre la première extrémité et la deuxième extrémité,
- maintenir en pression le matériau thermoplastique injecté, pendant l'étape de refroidissement,
- démonter le dispositif de raccordement,
dans lequel l'étape de montage du dispositif de raccordement comprend les étapes consistant à :
- mettre en place une première partie d'une base du dispositif de raccordement sur la surface à étanchéifier,
- positionner la première extrémité et la deuxième extrémité contre la première partie de la base,
- fixer une deuxième partie de la base contre la première partie, de sorte que la première extrémité et la deuxième extrémité sont positionnées dans une cavité formée par l'assemblage de la première partie et de la deuxième partie,
- fixer une tête d'injection du dispositif de raccordement sur la base.

La présente invention présente ainsi l'avantage de permettre la fabrication de joints d'étanchéité composés de portions de joints d'étanchéité, par exemple de dimensions plus petites, raccordées ensemble. Cela convient particulièrement à des installations présentant des dimensions importantes, par exemple des turbines hydroélectriques. L'invention permet de réaliser des joints d'étanchéité de grande dimension, par exemple jusqu'à quinze mètres de diamètre environ.

Les portions de joint d'étanchéité à raccorder peuvent correspondre à des joints d'étanchéité moulés, extrudés, ou usinés.

De plus, le procédé selon l'invention permet d'obtenir une continuité de qualité quasiment parfaite du profil (en termes de forme et dimensions) du joint d'étanchéité ainsi formé au niveau de la zone de raccordement, sans opération d'ébavurage. Seuls des points d'injection et d'évent, situés dans une partie non fonctionnelle du joint d'étanchéité formé, sont à araser.

Le procédé selon l'invention permet aussi d'obtenir les mêmes caractéristiques techniques dans la zone de raccordement que dans le reste du joint d'étanchéité formé. En particulier, le procédé selon l'invention préserve la résistance à la rupture par élongation dans la zone de raccordement.

Ainsi, le procédé selon l'invention permet une liaison fiable et efficace entre les portions de joint d'étanchéité raccordées.

Le matériau utilisé pour le raccordement est identique au matériau des portions de joints d'étanchéité à raccorder, en particulier du polyuréthane thermoplastique pour des joints d'étanchéité en polyuréthane thermoplastique, afin d'assurer les mêmes caractéristiques mécaniques à la jonction des deux portions ou extrémités, et afin d'assurer une lèvre d'étanchéité continue sans imperfection dans la zone de raccordement.

L'utilisation de polyuréthane thermoplastique pour raccorder deux extrémités de joint en polyuréthane thermoplastique présente l'avantage d'offrir des raccordements, et par conséquent des joints d'étanchéité, d'une qualité plus élevée que celle offerte par des procédés de raccordement connus. En particulier, le polyuréthane thermoplastique présente de bonnes propriétés de résistance à l'abrasion.

L'homogénéité du nouveau joint formé par le raccordement de la première et de la deuxième extrémité est obtenue par une soudure chimique entre le polyuréthane, initialement froid, des deux extrémités à raccorder et le polyuréthane chaud venant d'être injecté.

En outre, le fait d'effectuer un raccordement sur site permet d'éviter de démonter les installations mécaniques pour effectuer les opérations de maintenance. Les opérations de maintenance peuvent alors être réalisées dans des laps de temps courts, de l'ordre de quelques heures. Cela limite les pertes d'exploitation.

Selon une autre caractéristique du procédé selon l'invention, l'étape de mise en place d'une première partie d'une base sur la surface à étanchéifier est précédée d'une étape de mise en place d'un étrier sur la première extrémité et sur la deuxième extrémité et est suivie d'une étape de fixation de chaque étrier contre la base.

Selon une autre caractéristique du procédé selon l'invention, l'étape de fixation de la tête d'injection sur la base comprend les étapes consistant à :
- fixer une partie intermédiaire de la tête d'injection avec un réservoir additionnel sur la base, et
- fixer un système d'injection de la tête d'injection sur la partie intermédiaire,
ou le cas échéant, l'étape consistant à fixer directement un système d'injection de la tête d'injection sur la base.

Selon une autre caractéristique du procédé selon l'invention, l'étape de montage du dispositif de raccordement comprend en outre une étape consistant à :
- mettre en place un noyau de la base préalablement à la mise en place de la première partie de la base.

Selon encore une autre caractéristique du procédé selon l'invention, l'étape de montage du dispositif de raccordement comprend en outre l'étape suivante consistant à :
- remplir un réservoir avec le matériau thermoplastique à injecter, préalablement à la mise en place de la tête d'injection sur la base ou, le cas échéant, du système d'injection sur la partie intermédiaire.

Selon une autre caractéristique du procédé selon l'invention, l'étape de démontage du dispositif de raccordement comprend les étapes consistant à :
- désolidariser la tête d'injection de la base, cette étape comprenant le cas échéant une étape de désolidarisation du système d'injection de la partie intermédiaire et une étape de désolidarisation de la partie intermédiaire de la base,
- le cas échéant, désolidariser les étriers de la base,
- désolidariser la deuxième partie de la base de la première partie de la base,
- retirer la première partie de la base, et le cas échéant, retirer le noyau.

Selon une caractéristique du procédé selon l'invention, celui-ci comporte en outre une étape consistant à araser le point d'injection et l'évent formés à l'issue de l'étape d'injection à chaud.

Le joint d'étanchéité obtenu par le procédé selon l'invention ne nécessite en effet aucun ébavurage, hormis l'arasage du point d'injection et de l'évent, situés dans des zones non fonctionnelles du joint.

Selon une autre caractéristique du procédé selon l'invention, le matériau thermoplastique, notamment du polyuréthane thermoplastique, est injecté à une température de l'ordre de 135°C à 175°C.

Selon un autre aspect de la présente invention, celle-ci a également pour objet un dispositif portatif de raccordement de deux portions de joint d'étanchéité en matériau thermoplastique selon les carcactéristiques de la revendication 8.

Le dispositif de raccordement selon l'invention offre la possibilité d'être transporté et utilisé sur site afin de mettre en œuvre le procédé ayant les caractéristiques précitées. Il est ainsi possible de réaliser la maintenance des joints d'étanchéité sur site même, sans démontage des équipements sur lesquels intervenir. Les opérations de maintenance durent moins longtemps ; les pertes d'exploitation sont diminuées. De plus, d'un encombrement faible, le dispositif de raccordement selon l'invention offre la possibilité d'effectuer le raccordement de joints d'étanchéité en des lieux parfois exigus.

En outre, la base est avantageusement interchangeable pour adapter le dispositif de raccordement selon l'invention à la surface à étanchéifier et/ou à la forme des deux portions de joint d'étanchéité à raccorder. Ainsi, le dispositif de raccordement selon l'invention permet de raccorder des joints d'étanchéité de forme variée et complexe (concave ou convexe) en sélectionnant une partie inférieure adaptée.

Du fait de la fixation réversible entre la tête d'injection et la base, le dispositif de raccordement peut être monté ou démonté en vue de son utilisation in situ ou en vue de son stockage ou son transport.

On notera que par forme homothétiquement similaire on entend forme similaire à une forme de référence (en l'occurrence celle des portions de joint d'étanchéité) mais de proportions différentes pour un rapport d'homothétie différent de 1.

Selon une caractéristique du dispositif selon la divulgation, les moyens de maintien en position des deux portions de joint d'étanchéité à raccorder correspondent à un dimensionnement de la première partie et de la deuxième partie tel que la cavité de forme homothétiquement similaire à celle des portions de joint d'étanchéité à raccorder présente des dimensions inférieures à celles des portions de joint d'étanchéité à raccorder, de sorte que chacune des deux portions de joint d'étanchéité à raccorder est comprimée lors de l'emboîtement et de la fixation de la première partie et de la deuxième partie.

Ainsi, la fixation de la première partie et de la deuxième partie l'une contre l'autre permet de comprimer les portions de joint d'étanchéité afin de les maintenir en position. La première partie et la deuxième partie agissent comme des mâchoires.

Le rapport d'homothétie entre la cavité et les portions de joint d'étanchéité est donc ici inférieur à 1.

Selon l'invention, les moyens de maintien en position des deux portions de joint d'étanchéité à raccorder correspondent à au moins deux étriers comprenant chacun un logement conformé et dimensionné pour recevoir et retenir l'une des deux portions de joint d'étanchéité, chaque étrier étant destiné à être fixé contre la base.

L'avantage de cette caractéristique est de permettre de tracter et positionner les extrémités des joints à raccorder, par exemple sur un arbre tournant, avant de procéder au raccordement de ces extrémités, puis de les maintenir en position pendant l'opération de soudage. Les étriers permettent également de décoller le joint de la pièce mécanique sur laquelle il est monté en vue de positionner la partie inférieure du moule pour raccorder les extrémités de ce joint.

Selon un mode de réalisation, la tête d'injection comprend une partie intermédiaire avec un réservoir additionnel conformée pour prolonger le canal d'injection formant réservoir et reposant sur la base, et des moyens de fixation réversible du système d'injection de la tête d'injection sur la partie intermédiaire de la tête d'injection, les moyens de fixation réversible autorisant le montage et le démontage du système d'injection sur la partie intermédiaire.

Le réservoir additionnel permet d'augmenter la capacité de stockage du dispositif de raccordement selon l'invention.

Le volume du réservoir peut être de l'ordre de 15 cm³.

Le dispositif de raccordement selon l'invention permet d'injecter de quelques grammes à une centaine de grammes de matériau thermoplastique comme du polyuréthane thermoplastique.

Selon une forme d'exécution, le canal d'injection formant réservoir est au moins partiellement tronconique.

Cette caractéristique présente l'avantage d'augmenter le volume du dispositif selon l'invention destiné à contenir le matériau thermoplastique à injecter, tout en offrant une bonne compacité, donc un encombrement limité.

Selon un mode de réalisation, les moyens de fixation réversible comprennent au moins une tige filetée pourvue à une première extrémité d'une tête appuyant contre un épaulement de la tête d'injection et dont une deuxième extrémité est insérée dans un trou taraudé ménagé sur la base.

Selon une caractéristique du dispositif selon l'invention, la base comprend une surface de support destinée à supporter la tête d'injection et la tête d'injection comprend une surface d'appui de forme complémentaire de la surface de support, permettant à la tête d'injection de reposer en équilibre sur la base.

Selon une forme d'exécution, la surface de support et la surface d'appui sont sensiblement planes de sorte que la tête d'injection repose sur la base selon un appui plan-plan.

La surface inférieure peut être plane. Elle peut être concave. Elle peut être incurvée. Elle peut être partiellement cylindrique.

Le dispositif de raccordement selon l'invention peut comprendre des moyens de positionnement destinés à la mise en position correcte de la tête d'injection par rapport à la base.

Selon un mode de réalisation, les moyens de positionnement comprennent deux goupilles, chaque goupille étant insérée à la fois dans un trou de la tête d'injection et dans un trou de la base, les trous de la tête d'injection et les trous de la base étant agencés sur la tête d'injection et sur la base de manière à faire coïncider leurs axes lors de la mise en place de la tête d'injection sur la base.

Le dispositif de raccordement comprend avantageusement des moyens de chauffe du matériau thermoplastique à injecter.

Les moyens de chauffe peuvent être disposés dans la base et/ou dans la tête d'injection.

Selon encore une autre caractéristique du dispositif de raccordement selon l'invention, les moyens de chauffe comprennent un collier chauffant entourant une partie au moins du réservoir.

Selon une autre caractéristique du dispositif de raccordement selon l'invention, les moyens de chauffe comprennent une canne chauffante s'étendant au moins partiellement à l'intérieur de la première partie de la base.

La base comprend avantageusement des moyens de refroidissement de la matière injectée dans la cavité.

Selon une possibilité, les moyens de refroidissement comprennent des canaux de circulation d'un fluide de refroidissement.

Selon une autre caractéristique du dispositif de raccordement selon l'invention, le fluide de refroidissement est l'air ambiant.

Selon un mode de réalisation, les moyens d'injection comprennent un système hydraulique comportant une pompe hydraulique et/ou un vérin hydraulique. Le système hydraulique peut comprendre un manomètre.

Cette caractéristique présente l'avantage d'indiquer la pression d'injection à un opérateur utilisant le dispositif de raccordement selon l'invention et permet donc à l'opérateur de réguler la pression en fonction du raccordement à effectuer.

De manière avantageuse, les moyens d'injection comprennent une pompe oléopneumatique.

Selon une possibilité, les moyens d'injection comprennent un micro vérin hydraulique. Un pointeau d'injection peut être mu par le micro vérin hydraulique.

Le dispositif de raccordement selon l'invention peut être alimenté par un mini groupe électrogène. Selon un mode de réalisation, il peut être alimenté par un compresseur d'air.

Le dispositif de raccordement selon l'invention présente avantageusement une masse inférieure à 10 kg, de préférence de l'ordre de 5 kg.

Selon une autre caractéristique du dispositif de raccordement selon l'invention, la tête d'injection comprend des moyens de mesure du gradient thermique en différents endroits du réservoir.

Selon une autre caractéristique du dispositif de raccordement selon l'invention, la base comprend un noyau.

Avantageusement, le dispositif de raccordement présente une hauteur inférieure ou égale à 21 cm, une longueur inférieure ou égale à 13 cm, et une largeur inférieure ou égale à 8 cm.

Selon une possibilité, le dispositif de raccordement selon l'invention présente une hauteur H de l'ordre de 135 mm, une longueur L de l'ordre de 80 mm et une largeur l de l'ordre de 70 mm.

Ainsi, le dispositif de raccordement selon un aspect de la présente invention présente un encombrement réduit. Il présente l'avantage d'être aisément transportable, par exemple dans une valise. Un seul opérateur suffit pour le transport et l'utilisation du dispositif de raccordement selon l'invention.

Le dispositif de raccordement selon l'invention permet de raccorder des portions de joint d'étanchéité en polyuréthane thermoplastique monomatières ou bimatières dans une gamme de dureté de 70 shore A à 78 shore D.

L'invention sera mieux comprise à l'aide de la description détaillée qui est exposée ci-dessous en regard des dessins annexés dans lesquels :
- La figure 1 est une vue en perspective montrant, de la gauche vers la droite, les différentes étapes du procédé de raccordement de deux extrémités appartenant chacune à un joint d'étanchéité différent, selon un mode de réalisation de l'invention,
- La figure 2 est une vue en perspective montrant, de gauche à droite, les différentes étapes d'un procédé de raccordement des extrémités d'un unique joint d'étanchéité ouvert, selon un mode de réalisation de l'invention,
- La figure 3 est une vue en perspective d'un dispositif de raccordement selon un mode particulier de réalisation de la présente invention,
- La figure 4 est une vue de dessus d'un dispositif de raccordement selon un mode particulier de réalisation de la présente invention,
- La figure 5 est une vue de côté d'un dispositif de raccordement selon un mode particulier de réalisation de la présente invention,
- La figure 6 est une vue en coupe selon la ligne I - I de la figure 4,
- La figure 7 est une vue en perspective d'un dispositif de raccordement selon un autre mode de réalisation de l'invention,
- La figure 8 est une vue en coupe et de profil du dispositif de raccordement selon le mode de réalisation illustré à la figure 7,
- La figure 9 est une vue de dessus du dispositif de raccordement selon le mode de réalisation illustré à la figure 7.

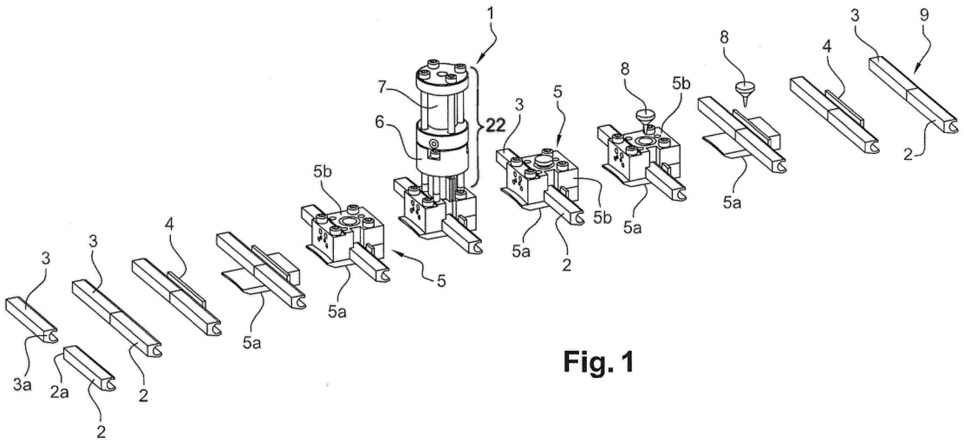

La figure 1 montre des étapes d'un procédé de raccordement sur site d'une première extrémité 2a et d'une deuxième extrémité 3a d'un premier joint d'étanchéité 2 et d'un deuxième joint d'étanchéité 3.

Le premier joint d'étanchéité 2 et le deuxième joint d'étanchéité 3 sont dans un même matériau thermoplastique et sont de même forme. Dans la suite de la description, le premier joint d'étanchéité 2 et le deuxième joint d'étanchéité 3 sont en polyuréthane thermoplastique.

Les étapes illustrées à la figure 1 sont présentées dans l'ordre chronologique, de gauche à droite sur la figure 1.

Les deux premières étapes consistent à rapprocher et positionner sur une surface à étanchéifier (non représentée) l'extrémité 2a du joint d'étanchéité 2 et l'extrémité 3a du joint d'étanchéité 3. L'étape suivante consiste à monter un dispositif 1 de raccordement, correspondant par exemple à une presse à injection directe, permettant le soudage de l'extrémité 2a du joint d'étanchéité 2 et de l'extrémité 3a du joint d'étanchéité 3.

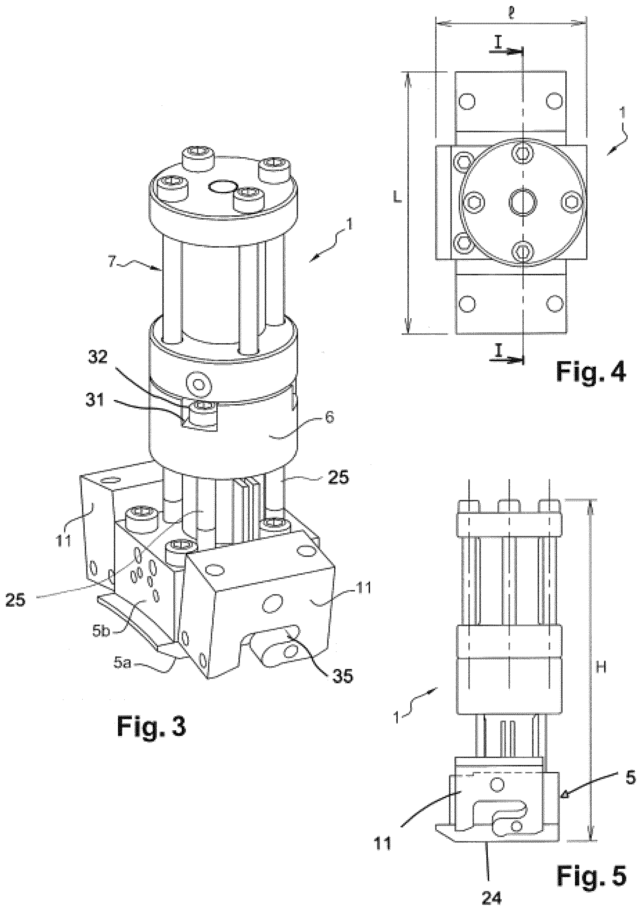

Le dispositif 1 de raccordement sera décrit plus en détails ci-après, en référence aux figures 3 à 9.

Le montage du dispositif 1 de raccordement peut comporter une étape consistant à positionner un noyau 4. Le noyau 4 est positionné au contact des joints d'étanchéité 2, 3. Le noyau 4 permet de délimiter les parties creuses d'un joint d'étanchéité 9 résultant du raccordement des joints d'étanchéité 2, 3. En d'autres termes, le noyau 4 permet de réaliser les évidements intérieurs du joint d'étanchéité 9.

Le montage du dispositif 1 de raccordement comporte une étape consistant à mettre en place une première partie (ou partie inférieure) 5a d'un moule ou base 5. La première partie 5a est placée sous les extrémités 2a, 3a des joints d'étanchéité 2, 3 à raccorder.

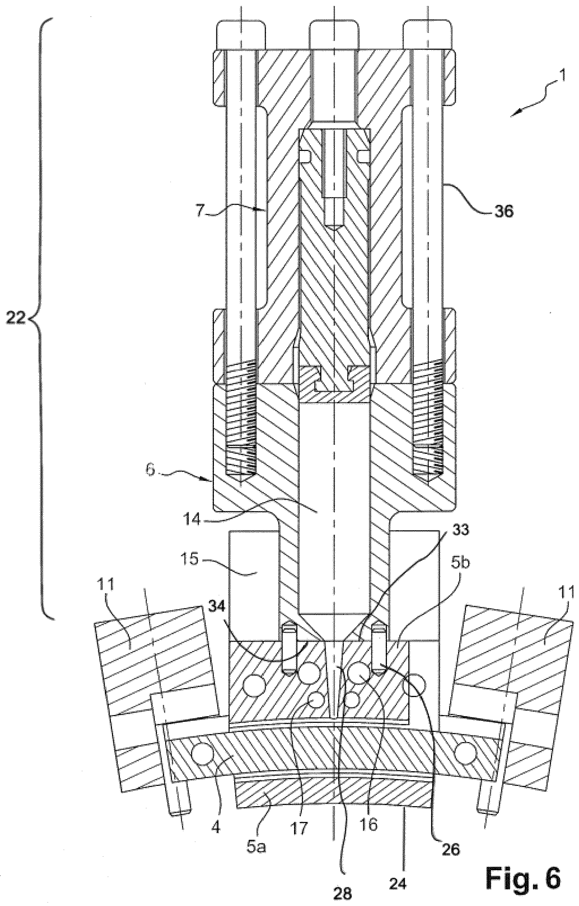

La surface inférieure 24, visible par exemple sur la figure 6, de la première partie 5a peut être en contact avec la surface à étanchéifier sur laquelle est réalisée l'opération de raccordement des joints d'étanchéité 2, 3.

Le montage du dispositif 1 de raccordement se poursuit avec l'assemblage d'une deuxième partie (ou partie supérieure) 5b de la base 5 sur la première partie 5a. L'assemblage de la deuxième partie 5b et de la première partie 5a peut être réalisé à l'aide de vis, par exemple.

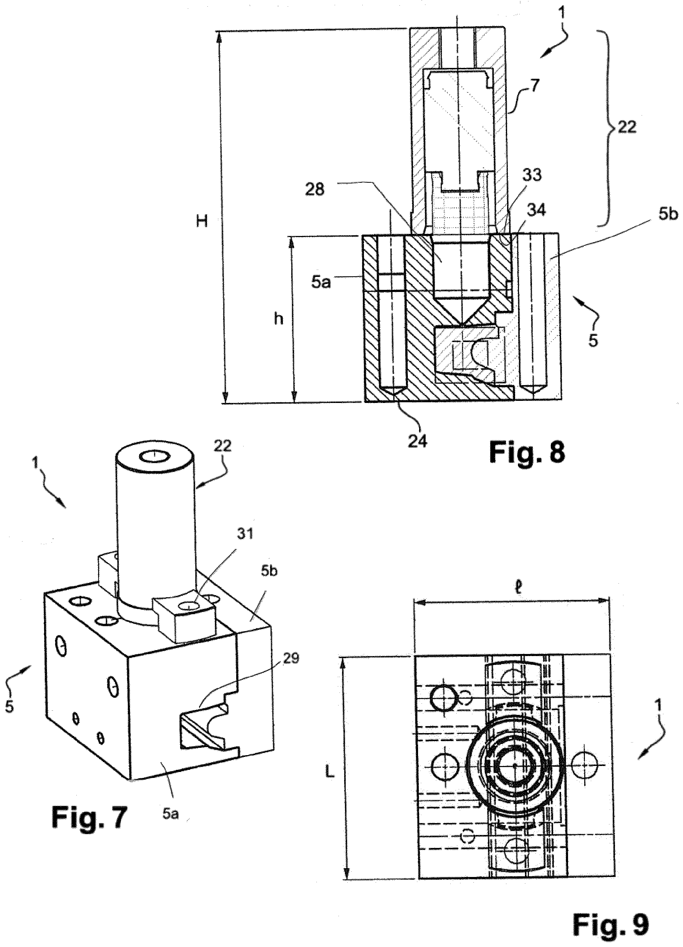

Une étape supplémentaire consiste à mettre en place, sur la deuxième partie 5b, une tête d'injection 22 comprenant ici une partie intermédiaire 6 avec un réservoir 14 contenant la matière à injecter (identique à celle des joins d'étanchéité) pour effectuer le raccordement des joints d'étanchéité 2, 3, et comprenant un système d'injection 7 muni de moyens d'injection. Le système d'injection 7, par exemple un système hydraulique, est fixé directement sur la base 5, lorsque la tête d'injection 22 est dépourvue de partie intermédiaire 6, comme cela est représenté sur les figures 7 à 9.

La tête d'injection 22 peut être assemblée sur la base 5 à l'aide de vis 25 et/ou de goupilles 26.

Le réservoir 14 peut contenir environ 15 cm³ de matière.

Les moyens d'injection peuvent comporter un vérin hydraulique et/ou une pompe hydraulique ou oléopneumatique permettant d'injecter le polyuréthane thermoplastique dans une cavité formée par l'assemblage de la première partie 5a et de la deuxième partie 5b. Les moyens d'injection peuvent correspondre à un système hydraulique qui peut être piloté manuellement ou électriquement, ou par un automate programmable.

Une fois le dispositif 1 de raccordement monté, l'étape suivante consiste à injecter le polyuréthane thermoplastique dans la cavité enfermant les extrémités 2a, 3a des joints d'étanchéité 2, 3 à raccorder.

L'injection se fait à chaud, à une température de l'ordre de 135°C. Elle peut se faire à des températures de l'ordre de 175°C.

Le polyuréthane thermoplastique injecté est maintenu en pression pendant sa phase de refroidissement. Le refroidissement peut être accéléré par des moyens de refroidissement intégrés dans la base 5.

Une fois le soudage des deux joints d'étanchéité 2, 3 réalisé par l'injection de polyuréthane thermoplastique, le procédé comprend les étapes de démontage du dispositif 1 de raccordement.

La tête d'injection 22 est désolidarisée de la base 5. Cette étape de désolidarisation de la tête d'injection 22 et de la base comprend le cas échéant une étape de désolidarisation de la partie intermédiaire 6 de la base 5 et une étape de désolidarisation du système d'injection 7 et de la partie intermédiaire 6.

Une carotte de coulée 8 formée au cours de l'injection est extraite d'un canal d'injection formant un réservoir 28 ménagé ici dans la deuxième partie 5b de la base 5.

La deuxième partie 5b et la première partie 5a de la base 5 sont démontées. Le cas échéant, le noyau 4 est ensuite retiré.

Au final, les deux joints d'étanchéité 2, 3 forment un seul et même joint d'étanchéité 9. Aucun ébavurage n'est nécessaire ; seul l'arasage du point d'injection et de l'évent, situés dans des zones non fonctionnelles, est réalisé.

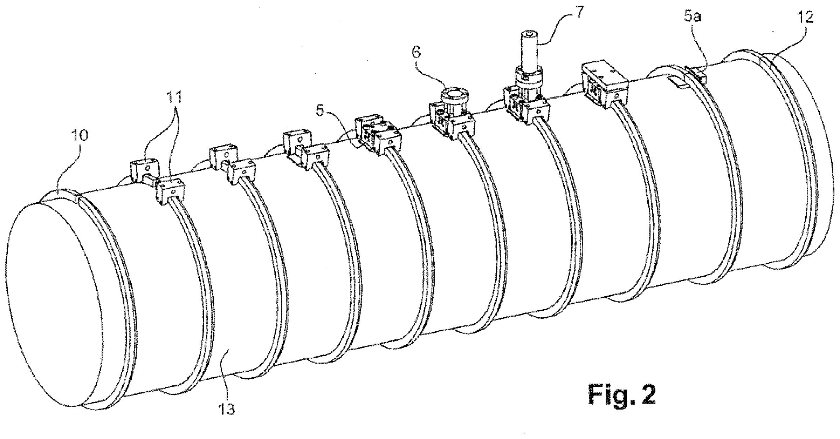

La figure 2 montre le procédé selon un aspect de la présente invention, mis en œuvre pour raccorder les extrémités d'un unique joint d'étanchéité 10 ouvert. Dans la suite de la description, le joint d'étanchéité 10 est en polyuréthane thermoplastique. Le matériau thermoplastique injecté pour le raccordement de ses extrémités correspond donc à du polyuréthane thermoplastique.

Dans cet exemple, le joint 10 ouvert est monté sur un arbre 13. Comme pour la figure 1, les étapes successives présentées de gauche à droite correspondent à l'ordre chronologique du procédé de raccordement des extrémités du joint 10 ouvert. Le procédé de la figure 2 reprend les étapes du procédé précédemment décrit et présenté à la figure 1.

On prévoit l'utilisation de deux étriers 11. Les étriers 11 permettent de tracter les extrémités du joint 10 ouvert l'une vers l'autre par élongation du joint 10 ouvert. Les étriers 11 permettent également de maintenir en position les extrémités du joint 10 ouvert.

L'étape de mise en place de la première partie 5a de la base 5 sur la surface à étanchéifier (paroi latérale de l'arbre 13) est ainsi précédée d'une étape de mise en place d'un étrier 11 sur la première extrémité et d'un étrier 11 sur la deuxième extrémité du joint d'étanchéité 10, et est suivie d'une étape de fixation de chaque étrier 11 contre la base 5. Lors du démontage, le procédé comprend en conséquence une étape de démontage des étriers 11.

Les figures 3 à 6 montrent un dispositif 1 de raccordement selon un mode particulier de réalisation. Les figures 7 à 9 montrent un dispositif 1 de raccordement selon un autre mode particulier de réalisation de l'invention.

Le dispositif 1 de raccordement permet la mise en œuvre du procédé de raccordement de joints d'étanchéité décrit précédemment. Le dispositif 1 de raccordement peut être une presse à injecter.

Comme cela est visible sur les figures 3 à 9, le dispositif 1 de raccordement comprend une base 5 faisant office de moule. La base 5 comprend une première partie 5a et une deuxième partie 5b. La base 5 comprend un canal d'injection formant un réservoir 28 destiné à contenir du polyuréthane thermoplastique, par exemple sous la forme de granules. De manière avantageuse, le canal d'injection formant réservoir 28 est au moins partiellement tronconique. Le canal d'injection formant réservoir 28 est intégré à la deuxième partie 5b dans l'exemple des figures 3 à 6, et à la première partie 5a dans l'exemple des figures 7 à 9.

La base 5 comprend des moyens de fixation, par exemple des vis, de la première partie 5a et de la deuxième partie 5b destinés à maintenir la première partie 5a et la deuxième partie 5b serrées l'une contre l'autre pour le raccordement des extrémités de joint d'étanchéité.

La première partie 5a et la deuxième partie 5b s'assemblent l'une à l'autre en délimitant une cavité de forme homothétiquement similaire à celle des portions de joint d'étanchéité à raccorder. Autrement dit, la cavité reproduit la forme des extrémités de joint d'étanchéité à raccorder, mais à une taille qui peut être différente.

Avantageusement, la cavité est de dimensions moins importantes que celles des extrémités de joints d'étanchéité à raccorder. Cela se traduit notamment par une section transverse de la cavité plus petite que celle des extrémités de joint d'étanchéité à raccorder.

La cavité débouche sur deux ouvertures latérales 29. Chaque ouverture latérale 29 est adaptée pour recevoir l'une des deux portions de joint d'étanchéité à raccorder,

Quelque soit le mode de réalisation, la base 5 peut comprendre des moyens de chauffe comme un collier 15 et/ou des cannes 16 chauffantes, un ou plusieurs circuits de refroidissement composés par exemple de canaux 17 laissant circuler l'air et s'étendant à l'intérieur de la première partie 5a ou la deuxième partie 5b, une ou plusieurs sondes de température.

La base 5 présente en outre une surface inférieure 24 conformée pour venir en appui sur la surface à étanchéifier. Dans l'exemple des figures 3 à 6, la surface inférieure 24 est incurvée (en fait partiellement cylindrique) et est donc adaptée pour reposer par exemple sur un arbre (cylindrique). Dans le mode de réalisation représenté sur les figures 7 à 9, la surface inférieure 24 est sensiblement plane.

Le dispositif 1 de raccordement comprend aussi une tête d'injection 22.

La tête d'injection 22 comprend un système d'injection 7 avec des moyens d'injection, par exemple un micro vérin hydraulique et/ou une pompe hydraulique ou oléopneumatique, destinés à injecter le matériau thermoplastique contenu dans le canal d'injection formant réservoir 28, identique à celui des extrémités de joint d'étanchéité à raccorder dans la cavité. La tête d'injection 22 peut comprendre un manomètre.

Le dispositif 1 comprend des moyens de fixation réversible de la tête d'injection 22 sur la base 5. Les moyens de fixation réversible comprennent au moins une tige filetée 25 ou vis pourvue à une première extrémité d'une tête 32 appuyant contre un épaulement 31 de la tête d'injection 22 et dont une deuxième extrémité est insérée dans un trou taraudé ménagé sur la base 5.

La base 5 comprend également une surface de support 33 destinée à supporter la tête d'injection 22, et la tête d'injection 22 comprend une surface d'appui 34 de forme complémentaire de la surface de support 33, permettant à la tête d'injection 22 de reposer en équilibre sur la base 5. Dans les exemples représentés sur les figures 3 à 9, la surface de support 33 et la surface d'appui 34 sont sensiblement planes de sorte que la tête d'injection 22 repose sur la base 5 selon un appui plan-plan.

Le dispositif 1 de raccordement peut comprendre des moyens de positionnement destinés à la mise en position correcte de la tête d'injection 22 par rapport à la base 5, visibles sur la figure 6. Les moyens de positionnement comprennent par exemple deux goupilles 26. Chaque goupille 26 est insérée à la fois dans un trou de la tête d'injection 22 et dans un trou de la base 5. Les trous de la tête d'injection 22 et les trous de la base 5 sont agencés sur la tête d'injection 22 et sur la base 5 de manière à faire coïncider leurs axes lors de la mise en place de la tête d'injection 22 sur la base 5.

Le dispositif 1 de raccordement comprend au moins deux étriers 11. Les étriers comprennent chacun un logement 35 conformé et dimensionné pour recevoir et retenir l'une des deux portions de joint d'étanchéité à raccorder. Chaque étrier 11 est destiné à être fixé contre une paroi latérale de la base 5, à proximité des ouvertures latérales 29, par exemple à l'aide de vis.

Comme illustré aux figures 3 à 6, la tête d'injection 22 peut comprendre une partie intermédiaire 6 avec un réservoir 14 additionnel. Le réservoir 14 additionnel est conformé pour prolonger le canal d'injection formant réservoir 28. La partie intermédiaire 6 repose sur la base 5. Des moyens de fixation réversible du système d'injection 7 sur la partie intermédiaire 6 sont prévus, comme des vis 36. Comme cela est visible sur les figures 7 à 9, la tête d'injection 22 peut être dépourvue de partie intermédiaire 6 avec réservoir 14 additionnel.

Le dispositif 1 de raccordement comprend avantageusement des moyens de chauffe du polyuréthane thermoplastique. Dans l'exemple de la figure 6, les moyens de chauffe sont formés par un collier 15 chauffant et une canne 16 chauffante.

Il peut comprendre le cas échéant un noyau 4.

Le dispositif 1 de raccordement est portatif. Selon le mode de réalisation des figures 3 à 6, il peut par exemple présenter une hauteur H de l'ordre de 21 cm, visible sur la figure 5. Il peut présenter une longueur L de l'ordre de 13 cm et une largeur l de l'ordre de 8 cm, visibles sur la figure 4. Selon l'exemple des figures 7 à 9, le dispositif 1 de raccordement présente une hauteur H de l'ordre de 135 mm (la base 5 présentant une hauteur h de l'ordre de 60 mm), une longueur L de l'ordre de 80 mm et une largeur l de l'ordre de 70 mm.

Le dispositif 1 de raccordement peut par exemple présenter une masse de l'ordre de 5 kg.

## Revendications

1. Procédé de raccordement sur site d'une première extrémité et d'une deuxième extrémité de formes similaires et en matériau thermoplastique, notamment du polyuréthane thermoplastique, d'un joint d'étanchéité (10) ouvert ou respectivement d'un premier joint d'étanchéité (2) et d'un deuxième joint d'étanchéité (3) sur une surface à étanchéifier, tel qu'il comprend les étapes consistant à :
- amener et monter sur site un dispositif (1) de raccordement et le positionner sur la surface à étanchéifier, en aplomb de la première extrémité et de la deuxième extrémité à raccorder,
- injecter à chaud entre la première extrémité et la deuxième extrémité un matériau thermoplastique identique à celui de la première extrémité et de la deuxième extrémité, au moyen du dispositif (1) de raccordement préalablement monté,
- refroidir ou laisser refroidir le matériau thermoplastique injecté entre la première extrémité et la deuxième extrémité,
- maintenir en pression le matériau thermoplastique injecté, pendant l'étape de refroidissement,
- démonter le dispositif (1) de raccordement,
dans lequel l'étape de montage du dispositif (1) de raccordement comprend les étapes consistant à :
- mettre en place une première partie (5a) d'une base (5) du dispositif (1) de raccordement sur la surface à étanchéifier,
- positionner la première extrémité et la deuxième extrémité contre la première partie (5a) de la base (5),
- fixer une deuxième partie (5b) de la base (5) contre la première partie (5a), de sorte que la première extrémité et la deuxième extrémité sont positionnées dans une cavité formée par l'assemblage de la première partie (5a) et de la deuxième partie (5b),
- fixer une tête d'injection (22) du dispositif de raccordement sur la base (5).

2. Procédé selon la revendication 1, **caractérisé en ce que** l'étape de mise en place d'une première partie (5a) d'une base (5) sur la surface à étanchéifier est précédée d'une étape de mise en place d'un étrier (11) sur la première extrémité et sur la deuxième extrémité et est suivie d'une étape de fixation de chaque étrier (11) contre la base (5).

3. Procédé selon la revendication 1 ou 2, **caractérisé en ce que** l'étape de fixation de la tête d'injection (22) sur la base (5) comprend les étapes consistant à :
- fixer une partie intermédiaire (6) de la tête d'injection (22) avec un réservoir (14) additionnel sur la base (5), et
- fixer un système d'injection (7) de la tête d'injection (22) sur la partie intermédiaire (6),
- ou le cas échéant, l'étape consistant à fixer directement un système d'injection (7) de la tête d'injection (22) sur la base (5).

4. Procédé selon l'une des revendications 1 à 3, **caractérisé en ce que** l'étape de montage du dispositif (1) de raccordement comprend en outre une étape consistant à :
- mettre en place un noyau (4) de la base (5) préalablement à la mise en place de la première partie (5a) de la base (5).

5. Procédé selon l'une des revendications 1 à 4, **caractérisé en ce que** l'étape de montage du dispositif (1) de raccordement comprend en outre l'étape suivante consistant à :
- remplir un réservoir (14, 28) avec le matériau thermoplastique à injecter, préalablement à la mise en place de la tête d'injection (22) sur la base (5) ou, le cas échéant, du système d'injection (7) sur la partie intermédiaire (6).

6. Procédé selon l'une quelconque des revendications 1 à 5, **caractérisé en ce que** l'étape de démontage du dispositif (1) de raccordement comprend les étapes consistant à :
- désolidariser la tête d'injection (22) de la base (5), cette étape comprenant le cas échéant une étape de désolidarisation du système d'injection (7) de la partie intermédiaire (6) et une étape de désolidarisation de la partie intermédiaire (6) de la base (5),
- le cas échéant, désolidariser les étriers (11) de la base (5),
- désolidariser la deuxième partie (5b) de la base (5) de la première partie (5a) de la base (5),
- retirer la première partie (5a) de la base (5), et le cas échéant, retirer le noyau (4).

7. Procédé selon l'une quelconque des revendications 1 à 6, **caractérisé en ce qu'**il comporte en outre une étape consistant à araser le point d'injection et l'évent formés à l'issue de l'étape d'injection à chaud.

8. Dispositif (1) portatif de raccordement de deux portions de joint d'étanchéité en matériau thermoplastique, notamment du polyuréthane thermoplastique, sur une surface à étanchéifier, destiné à la mise en œuvre du procédé selon l'une quelconque des revendications 1 à 7, tel que le dispositif (1) de raccordement comprend une tête d'injection (22), une base (5) formant un moule, des moyens de fixation réversible de la tête d'injection (22) sur la base (5) autorisant le montage et le démontage de la tête d'injection (22) sur la base (5), et des moyens de maintien en position des deux portions de joint d'étanchéité en vue de leur raccordement,
la base (5) comprenant une première partie (5a), un canal d'injection formant réservoir (28), une deuxième partie (5b), des moyens de fixation de la première partie (5a) et de la deuxième partie (5b) destinés à maintenir la première partie (5a) et la deuxième partie (5b) serrées l'une contre l'autre pour le raccordement, et une surface inférieure (24) conformée pour venir en appui sur la surface à étanchéifier,
la première partie (5a) et la deuxième partie (5b) s'emboîtant l'une contre l'autre en délimitant une cavité de forme homothétiquement similaire à celle des portions de joint d'étanchéité à raccorder, la cavité débouchant sur deux ouvertures latérales (29) chacune adaptée pour recevoir l'une des deux portions de joint d'étanchéité à raccorder,
la tête d'injection (22) comprenant un système d'injection (7) avec des moyens d'injection destinés à injecter un matériau thermoplastique, identique à celui des portions de joint d'étanchéité à raccorder, contenu dans le canal d'injection formant réservoir (28), dans la cavité,
dans lequel les moyens de maintien en position des deux portions de joint d'étanchéité à raccorder correspondent à au moins deux étriers (11) comprenant chacun un logement (35) conformé et dimensionné pour recevoir et retenir l'une des deux portions de joint d'étanchéité, chaque étrier (11) étant destiné à être fixé contre la base (5).

9. Dispositif (1) selon la revendication 8, **caractérisé en ce que** la tête d'injection (22) comprend une partie intermédiaire (6) avec un réservoir (14) additionnel conformée pour prolonger le canal d'injection formant réservoir (28) et reposant sur la base (5), et des moyens de fixation réversible du système d'injection (7) de la tête d'injection (22) sur la partie intermédiaire (6) de la tête d'injection (22), les moyens de fixation réversible autorisant le montage et le démontage du système d'injection (7) sur la partie intermédiaire (6).

10. Dispositif (1) selon l'une des revendications 8 à 9, **caractérisé en ce que** le canal d'injection formant réservoir (28) est au moins partiellement tronconique.

11. Dispositif (1) selon l'une des revendications 8 à 10, **caractérisé en ce que** les moyens de fixation réversible comprennent au moins une tige filetée (25) pourvue à une première extrémité d'une tête (32) appuyant contre un épaulement (31) de la tête d'injection (22) et dont une deuxième extrémité est insérée dans un trou taraudé ménagé sur la base (5).

12. Dispositif (1) selon l'une des revendications 8 à 11, **caractérisé en ce que** la base (5) comprend une surface de support (33) destinée à supporter la tête d'injection (22) et la tête d'injection (22) comprend une surface d'appui (34) de forme complémentaire de la surface de support (33), permettant à la tête d'injection (22) de reposer en équilibre sur la base (5).

13. Dispositif (1) selon l'une des revendications 8 à 12, **caractérisé en ce que** la surface de support (33) et la surface d'appui (34) sont sensiblement planes de sorte que la tête d'injection (22) repose sur la base (5) selon un appui plan-plan.

## Patentansprüche

1. Verfahren zum Verbinden vor Ort einer ersten Extremität und einer zweiten Extremität von ähnlichen Formen und aus thermoplastischem Material, vornehmlich aus thermoplastischem Polyurethan, mit einer offenen Dichtungfuge (10) oder entsprechend mit einer ersten Dichtungfuge (2) und einer zweiten Dichtungsfuge (3) auf einer abzudichtenden Oberfläche, solcherart, dass es die Schritte umfasst bestehend aus:
- dem Bereitstellen und Montieren vor Ort einer Vorrichtung (1) zum Verbinden und deren Positionieren auf der abzudichtenden Oberfläche, senkrecht zu der zu verbindenden ersten Extremität und zweiten Extremität,
- dem Heißinjizieren zwischen der ersten Extremität und der zweiten Extremität eines thermoplastischen Materials, identisch mit dem der ersten Extremität und der zweiten Extremität, mittels der vorher montierten Vorrichtung (1) zum Verbinden,
- dem Abkühlen oder Abkühlenlassen des zwischen der ersten Extremität und der zweiten Extremität injizierten thermoplastischen Materials,
- dem Unterdruckhalten des injizierten thermoplastischen Materials während dem Abkühlungsschritt,
- dem Demontieren der Vorrichtung (1) zum Verbinden,
in welchem der Schritt der Montage der Vorrichtung (1) zum Verbinden die Schritte umfasst bestehend aus:
- dem Einrichten eines ersten Teils (5a) einer Basis (5) der Vorrichtung (1) zum Verbinden auf der abzudichtenden Oberfläche,
- dem Positionieren der ersten Extremität und der zweiten Extremität gegen den ersten Teil (5a) der Basis (5),
- dem Befestigen eines zweiten Teils (5b) der Basis (5) gegen den ersten Teil (5a), sodass die erste Extremität und die zweite Extremität in einer durch den Zusammenbau des ersten Teils (5a) und des zweiten Teils (5b) ausgebildeten Aussparung positioniert sind,
- dem Befestigen eines Injektionskopfes (22) der Vorrichtung zum Verbinden auf der Basis (5).

2. Verfahren nach Anspruch 1, **dadurch gekennzeichnet, dass** dem Schritt des Einrichtens eines ersten Teils (5a) einer Basis (5) auf der abzudichtenden Oberfläche ein Schritt des Einrichtens eines Bügels (11) auf der ersten Extremität und auf der zweiten Extremität vorangeht und ein Schritt der Befestigung jedes Bügels (11) gegen die Basis (5) darauf folgt.

3. Verfahren nach Anspruch 1 oder 2, **dadurch gekennzeichnet, dass** der Schritt des Befestigens des Injektionskopfes (22) auf der Basis (5) die Schritte umfasst bestehend aus:
- dem Befestigen eines mittleren Teils (6) des Injektionskopfes (22) mit einem zusätzlichen Behälter (14) auf der Basis (5), und
- dem Befestigen eines Injektionssystems (7) des Injektionskopfes (22) auf dem mittleren Teil (6),
- oder gegebenenfalls dem Schritt bestehend aus dem direkten Befestigen eines Injektionssystems (7) des Injektionskopfes (22) auf der Basis (5).

4. Verfahren nach einem der Ansprüche 1 bis 3, **dadurch gekennzeichnet, dass** der Schritt der Montage der Vorrichtung (1) zum Verbinden weiter einen Schritt umfasst bestehend aus:
- dem Einrichten eines Kerns (4) der Basis (5) im Vorfeld des Einrichtens des ersten Teils (5a) der Basis (5).

5. Verfahren nach einem der Ansprüche 1 bis 4, **dadurch gekennzeichnet, dass** der Schritt der Montage der Vorrichtung (1) zum Verbinden weiter den Schritt umfasst bestehend aus:
- dem Füllen eines Behälters (14, 28) mit dem zu injizierenden thermoplastischen Material im Vorfeld der Einrichtung des Injektionskopfes (22) auf der Basis (5) oder gegebenenfalls des Injektionssystems (7) auf dem mittleren Teil (6).

6. Verfahren nach einem der Ansprüche 1 bis 5, **dadurch gekennzeichnet, dass** der Schritt der Demontage der Vorrichtung (1) zum Verbinden die Schritte umfasst bestehend aus:
- dem Desolidarisieren des Injektionskopfes (22) von der Basis (5), wobei dieser Schritt gegebenenfalls einen Schritt der Desolidarisierung des Injektionssystems (7) von dem mittleren Teil (6) und einen Schritt der Desolidarisierung des mittleren Teils (6) von der Basis (5) umfasst,
- gegebenenfalls dem Desolidarisieren der Bügel (11) von der Basis (5),
- dem Desolidarisieren des zweiten Teils (5b) von der Basis (5) des ersten Teils (5a) der Basis (5),
- dem Abnehmen des ersten Teils (5a) der Basis und gegebenenfalls Abnehmen des Kerns (4).

7. Verfahren nach einem der Ansprüche 1 bis 6, **dadurch gekennzeichnet, dass** es weiter einen Schritt umfasst bestehend aus dem Nivellieren des Injektionspunktes und der Öffnung ausgebildet infolge des Schrittes der Heißinjektion.

8. Tragbare Vorrichtung (1) zum Verbinden von zwei Abschnitten einer Dichtungsfuge aus thermoplastischem Material, vornehmlich thermoplastischem Polyurethan, auf einer abzudichtenden Oberfläche, bestimmt zum Durchführen des Verfahrens nach einem der Ansprüche 1 bis 7, solcherart, dass die Vorrichtung (1) zum Verbinden einen Injektionskopf (22), eine eine Form bildende Basis (5), Mittel zur reversiblen Befestigung des Injektionskopfes (22) auf der Basis (5), die Montage und Demontage des Injektionskopfes (22) auf der Basis (5) erlaubend, und Mittel zum Halten der beiden Abschnitte der Dichtungsfuge in Position in Bezug auf ihre Verbindung umfasst,
wobei die Basis (5) einen ersten Teil (5a), einen einen Behälter (28) ausbildenden Injektionskanal, einen zweiten Teil (5b), Mittel zur Befestigung des ersten Teils (5a) und des zweiten Teils (5b), bestimmt, um den ersten Teil (5a) und den zweiten Teil (5b) für die Verbindung aneinandergepresst zu halten, und eine untere Oberfläche (24), konditioniert, um auf der abzudichtenden Oberfläche aufzuliegen, umfasst,
wobei der erste Teil (5a) und der zweite Teil (5b) gegeneinander einrasten, eine Aussparung von homothetisch ähnlicher Form wie die der Teile der zu verbindenden Dichtungsfuge eingrenzend, wobei die Aussparung in zwei laterale Öffnungen (29) mündet, jeweils angepasst, um einen der beiden Abschnitte der zu verbindenden Dichtungsfuge aufzunehmen,
wobei der Injektionskopf (22) ein Injektionssystem (7) mit Injektionsmitteln umfasst, bestimmt zum Injizieren eines thermoplastischen Materials identisch mit demjenigen der Abschnitte der zu verbindenden Dichtungsfuge, enthalten in dem einen Behälter (28) bildenden Injektionskanal in der Aussparung,
in welchem die Mittel zum Halten der beiden Abschnitte der zu verbindenden Dichtungsfuge in Position wenigstens zwei Bügeln (11) jeweils einer Aufnahme (35) entsprechen, konditioniert und dimensioniert, um einen der beiden Abschnitte der Dichtungsfuge aufzunehmen und festzuhalten, wobei jeder Bügel (11) dafür bestimmt ist, gegen die Basis (5) befestigt zu werden.

9. Verfahren (1) nach Anspruch 8, **dadurch gekennzeichnet, dass** der Injektionskopf (22) einen mittleren Teil (6) mit einem zusätzlichen Behälter (14) umfasst, konditioniert, um den einen Behälter (28) bildenden Injektionskanal zu verlängern und auf der Basis (5) ruhend, und Mittel zur reversiblen Befestigung des Injektionssystems (7) des Injektionskopfes (22) auf dem mittleren Teil (6) des Injektionskopfes (22), wobei die Mittel zur reversiblen Befestigung die Montage und die Demontage des Injektionssystems (7) auf dem mittleren Teil (6) ermöglichen.

10. Vorrichtung (1) nach einem der Ansprüche 8 bis 9, **dadurch gekennzeichnet, dass** der einen Behälter (28) bildende Injektionskanal wenigstens teilweise kegelförmig ist.

11. Vorrichtung (1) nach einem der Ansprüche 8 bis 10, **dadurch gekennzeichnet, dass** die Mittel zur reversiblen Befestigung wenigstens einen Gewindestift (25) umfassen, ausgestattet an einer ersten Extremität mit einem Kopf (32), sich gegen einen Absatz (31) des Injektionskopfes (22) stützend, und dessen zweite Extremität in ein auf der Basis (5) angebrachtes Gewindeloch eingeführt ist.

12. Vorrichtung (1) nach einem der Ansprüche 8 bis 11, **dadurch gekennzeichnet, dass** die Basis (5) eine Stützoberfläche (33) umfasst, dafür bestimmt, den Injektionskopf (22) zu stützen, und der Injektionskopf (22) eine Auflageoberfläche (34) von zu der Stützoberfläche (33) komplementärer Form umfasst, es dem Injektionskopf (22) erlaubend, gleichmäßig auf der Basis (5) zu ruhen.

13. Vorrichtung (1) nach einem der Ansprüche 8 bis 12, **dadurch gekennzeichnet, dass** die Stützoberfläche (33) und die Auflageoberfläche (34) im Wesentlichen flach sind, sodass der Injektionskopf (22) gemäß einem vollkommen flachen Aufliegen auf der Basis (5) ruht.

## Claims

1. A method for on-site connecting a first end and a second end of similar shapes and made of thermoplastic material, in particular of thermoplastic polyurethane, of an open seal (10) or respectively a first seal (2) and a second seal (3) on a surface to be sealed, as it comprises the steps of:
- bringing and mounting on site a connection device (1) and positioning it on the surface to be sealed, beneath the first end and the second end to be connected,
- injecting under heat between the first end and the second end a thermoplastic material identical to that of the first end and the second end, by means of the previously mounted connection device (1),
- cooling or allowing the thermoplastic material injected between the first end and the second end to cool,
- keeping the injected thermoplastic material under pressure during the cooling step,
- dismounting the connection device (1),
in which the step of mounting the connection device (1) comprises the steps of:
- placing a first portion (5a) of a base (5) of the connection device (1) on the surface to be sealed,
- positioning the first end and the second end against the first portion (5a) of the base (5),
- fixing a second portion (5b) of the base (5) against the first portion (5a), so that the first end and the second end are positioned in a cavity formed by the assembly of the first portion (5a) and the second portion (5b),
- fixing an injection head (22) of the connection device on the base (5).

2. The method according to claim 1, **characterized in that** the step of placing a first portion (5a) of a base (5) on the surface to be sealed is preceded by a step of placing a stirrup (11) on the first end and on the second end and is followed by a step of fixing each stirrup (11) against the base (5).

3. The method according to claim 1 or 2, **characterized in that** the step of fixing the injection head (22) on the base (5) comprises the steps of:
- fixing an intermediate portion (6) of the injection head (22) with an additional reservoir (14) on the base (5), and
- fixing a system for injecting (7) the injection head (22) on the intermediate portion (6),
- or where appropriate, the step of directly fixing a system for injecting (7) the injection head (22) on the base (5).

4. The method according to any of claims 1 to 3, **characterized in that** the step of mounting the connection device (1) further comprises a step of:
- placing a core (4) of the base (5) prior to the placing of the first portion (5a) of the base (5).

5. The method according to any of claims 1 to 4, **characterized in that** the step of mounting the connection device (1) further comprises the following step of:
- filling a reservoir (14, 28) with the thermoplastic material to be injected, prior to the placing of the injection head (22) on the base (5) or, where appropriate, of the injection system (7) on the intermediate portion (6).

6. The method according to any one of claims 1 to 5, **characterized in that** the step of dismounting the connection device (1) comprises the steps of:
- disengaging the injection head (22) from the base (5), this step comprising, where appropriate, a step of disengaging the injection system (7) from the intermediate portion (6) and a step of disengaging the intermediate portion (6) from the base (5),
- where appropriate, disengaging the stirrups (11) from the base (5),
- disengaging the second portion (5b) of the base (5) from the first portion (5a) of the base (5),
- removing the first portion (5a) of the base (5), and where appropriate, removing the core (4).

7. The method according to any one of claims 1 to 6, **characterized in that** it further includes a step of leveling the injection point and the vent formed at the end of the under-heat injection step.

8. A portable device (1) for connecting two portions of seal made of thermoplastic material, in particular of thermoplastic polyurethane, on a surface to be sealed, intended to implement the method according to any one of claims 1 to 7, such that the connection device (1) comprises an injection head (22), a base (5) forming a mold, reversible fixing means of the injection head (22) on the base (5) authorizing mounting and dismounting the injection head (22) on the base (5), and means for keeping in position the two portions of seal for their connection,
the base (5) comprising a first portion (5a), an injection channel forming a reservoir (28), a second portion (5b), means for fixing the first portion (5a) and the second portion (5b) intended to keep the first portion (5a) and the second portion (5b) clamped against each other for the connection, and a lower surface (24) shaped to bear on the surface to be sealed,
the first portion (5a) and the second portion (5b) interlocked one against the other by delimiting a cavity of a shape homothetically similar to that of the portions of the seal to be connected, the cavity opening onto two lateral openings (29) each adapted to receive one of the two portions of the seal to be connected,
the injection head (22) comprising an injection system (7) with injection means intended to inject a thermoplastic material, identical to that of the portions of the, seal to be connected, contained in the injection channel forming a reservoir (28), in the cavity,
in which the means for keeping in position the two portions of seal to be connected correspond to at least two stirrups (11) each comprising a housing (35) shaped and dimensioned to receive and retain one of the two portions of the seal, each stirrup (11) being intended to be fixed against the base (5).

9. The device (1) according to claim 8, **characterized in that** the injection head (22) comprises an intermediate portion (6) with an additional reservoir (14) shaped to extend the injection channel forming a reservoir (28) and resting on the base (5), and reversible fixing means of the injection system (7) of the injection head (22) on the intermediate portion (6) of the injection head (22), the reversible fixing means authorizing the mounting and dismounting of the injection system (7) on the intermediate portion (6).

10. The device (1) according to any of claims 8 to 9, **characterized in that** the injection channel forming a reservoir (28) is at least partially frusto-conical.

11. The device (1) according to any of claims 8 to 10, **characterized in that** the reversible fixing means comprise at least one threaded rod (25) provided at one end with a head (32) bearing against a shoulder (31) of the injection head (22) and whose second end is inserted into a threaded hole formed on the base (5).

12. The device (1) according to any of claims 8 to 11, **characterized in that** the base (5) comprises a support surface (33) intended to support the injection head (22) and the injection head (22) comprises a bearing surface (34) of a shape complementary to the support surface (33), allowing the injection head (22) to rest balanced on the base (5).

13. The device (1) according to any of claims 8 to 12, **characterized in that** the support surface (33) and the bearing surface (34) are substantially flat so that the injection head (22) rests on the base (5) according to a plane-plane bearing.
